# EUROPÄISCHE PATENTANMELDUNG

(11) **EP 3 115 857 A1**
(43) Veröffentlichungstag der Anmeldung: **11.01.2017**
(21) Anmeldenummer: 15176108.7
(22) Anmeldetag: 09.07.2015
(51) Int. Cl.: G05B 19/4061, B25J 9/16, G05B 19/4069

(54) **TRAJEKTORIENBESTIMMUNGSVERFAHREN FÜR NEBENZEITBEWEGUNGEN**

(71) Anmelder: Siemens Aktiengesellschaft, 80333 München (DE)
(72) Erfinder: Geissdörfer, Klaus, 91056 Erlangen (DE); Hamm, Carsten, 91058 Erlangen (DE); Linke, Hartmut, 91056 Erlangen (DE); Schäfers, Elmar, 90763 Fürth (DE)

(57) **Zusammenfassung**

Die Erfindung betrifft ein Verfahren (100) zur Bestimmung einer optimierten Trajektorie für eine Nebenzeitbewegung eines Werkzeugs (10) einer Werkzeugmaschine von einer Startposition (12) zu einer Zielposition (14). Die Nebenzeitbewegung erfolgt dabei in einem räumlich begrenzten Verfahrbereich (20), der durch geometrische Bedingungen abgebildet ist. Das erfindungsgemäße Verfahren läuft unter Vermeidung von Kollisionen ab und umfasst den Schritt eines Ermittelns einer ersten Trajektorie (32) des Werkzeugs(10) mittels eines Wegfindungsalgorithmus. Dabei ist die erste Trajektorie (32) auf mindestens einen wählbaren Zielparameter bei der Nebenzeitbewegung optimiert.

## Beschreibung

Die Erfindung betrifft ein Verfahren zur Bestimmung einer Trajektorie für eine Nebenzeitbewegung eines Werkzeugs und ein korrespondierendes Programm. Die Erfindung betrifft ferner eine Werkzeugmaschine mit mindestens einem Werkzeug, die dazu ausgebildet ist, das erfindungsgemäße Verfahren umzusetzen.

Aus WO 2012/069129 A1 ist ein Verfahren zur Steuerung eines Robotersystems bekannt, bei dem eine Mehrzahl an Robotern in aufeinander abgestimmter Weise Arbeitsschritte durchführen. Die einzelnen Arbeitsschritte umfassen dabei Abschnitte, die separat im Hinblick auf die dazu erforderliche Abschnittszeit optimiert werden. Dabei werden die maximal zulässigen Antriebskräfte, Antriebsmomente und Gelenkgeschwindigkeiten berücksichtigt. Ferner umfassen die Arbeitsschritte der Roboter Synchronisationspunkte, an denen zwei oder mehr Roboter zeitgleich eine bestimmte Konfiguration einzunehmen haben, beispielsweise zur Übergabe einer Nutzlast. Zur näheren Einstellung des Ablaufs der einzelnen Abschnitte wird ein Bahngeschwindigkeitsprofil einer Bahnkurve zwischen zwei Posen eines Roboters optimiert. Dabei werden mehrere Gütekriterien, insbesondere Schwingungsbeanspruchung, Umrichterverluste und Energiebedarf, angewandt, die gewichtet werden.

EP 2 793 090 A1 offenbart ein additives Fertigungsverfahren, bei dem ein additives Fertigungswerkzeug in einer Ebene Material aufträgt. Das aufgetragene Material wird in einem anschließenden Schritt mit einem Laser mit umgebendem Material verbunden und gehärtet. Beim Auftragen des Materials wird eine Spline-Linie abgefahren, die eine Profilvorderkante mit einer Profilhinterkante eines zu fertigenden aerodynamischen Profils verbindet.

Die bekannten Verfahren haben den Nachteil, dass die bei den Nebenzeitbewegungen abgefahrenen Pfade des Fertigungswerkzeugs oder des Roboters einen erhöhten Zeitaufwand erfordern.

Ferner ist es für Nebenzeitbewegungen unerlässlich, ein hohes Maß an Kollisionssicherheit zu bieten. Um dies zu gewährleisten, sind präzise Berechnungen der Werkzeugbahn notwendig, die hohe Anforderungen in puncto Rechenleistung stellen. Der Erfindung liegt die Aufgabe zugrunde, ein Verfahren zur Bestimmung einer Trajektorie für Nebenzeitbewegungen eines Werkzeugs zur Verfügung zu stellen, das die Nachteile aus dem Stand der Technik überwindet. Es ist ein Verfahren bereitzustellen, das gleichzeitig ein hohes Maß an Kollisionssicherheit und Zeitersparnis bei der Nebenzeitbewegung bietet und mit einfacher Hardware kosteneffizient umsetzbar ist.

Die Aufgabenstellung wird durch das beanspruchte Verfahren zur Bestimmung einer optimierten Trajektorie gelöst. Das erfindungsgemäße Verfahren ist dabei auf Nebenzeitbewegungen ausgelegt. Eine Nebenzeitbewegung ist jegliche Bewegung eines Werkzeugs in einer Werkzeugmaschine, bei der keine Bearbeitung eines Werkstücks erfolgt. Werkzeugmaschinen, auf denen das erfindungsgemäße Verfahren durchgeführt wird, sind typischerweise NC- und CNC-Werkzeugmaschinen. Nebenzeitbewegungen sind beispielsweise Rückführungen des Werkzeugs nach einer Werkstückbearbeitung zu einem Ausgangspunkt, wo eine anschließende Werkstückbearbeitung aufzunehmen ist. Dabei wird das Werkzeug in der Werkzeugmaschine in einem räumlich begrenzten Verfahrbereich bewegt. Zum Verfahrbereich gehört der lichte Raum, der zwischen Komponenten der Werkzeugmaschine selbst, darin befestigten Spannmitteln und mindestens einem Werkstück, liegt. Der Verfahrbereich wird ferner durch die Befestigung und Beweglichkeit des Werkzeugs definiert. Der Verfahrbereich ist der räumliche Bereich, der für das Werkzeug bei einem Fertigungsvorgang kollisionsfrei erreichbar ist.

Die jeweilige Lage der Komponenten der Werkzeugmaschine, beispielsweise Wandungen der Werkzeugmaschine, die vorliegenden Spannmittel und das mindestens eine Werkstück definieren geometrische Bedingungen, die während der Nebenzeitbewegung einzuhalten sind. Unter der Einhaltung der geometrischen Bedingungen ist das Vermeiden von Kollisionen des Werkzeugs zu verstehen. Der Verfahrbereich des Werkzeugs wird somit durch die geometrischen Bedingungen abgebildet.

In einem Verfahrensschritt wird mittels eines Wegfindungsalgorithmus eine erste Trajektorie für eine angestrebte Nebenzeitbewegung ermittelt. Die erste Trajektorie ist dabei ein Weg von einer Startposition zu einer Endposition der Nebenzeitbewegung. Der Wegfindungsalgorithmus ist dazu ausgebildet, die erste Trajektorie im Hinblick auf mindestens einen wählbaren Zielparameter, beispielsweise den Zeitbedarf für die Nebenzeitbewegung, zu optimieren. Weitere wählbare Zielparameter sind der Energiebedarf für die Nebenzeitbewegung oder die bei der Nebenzeitbewegung auftretende Verlustleistung der Werkzeugmaschine. Der Wegfindungsalgorithmus nutzt als Eingabe ferner die geometrischen Bedingungen, die zusammen mit dem Zielparameter, einer Startposition und einer Endposition der Nebenzeitbewegung die Rechenaufgabe für den Ablauf des Wegfindungsalgorithmus im ersten Verfahrensschritt definieren. Ferner wird anhand der ersten Trajektorie mindestens ein Befehl an ein Antriebsmittel des Werkzeugs ermittelt, der mit der ersten Trajektorie korrespondiert. Der Befehl ist beispielsweise ein Beschleunigungsbefehl entlang einer Bewegungsachse des Werkzeugs.

Durch die Verwendung eines Wegfindungsalgorithmus wird ein hohes Maß an Zeitersparnis und Energieersparnis bei der Durchführung einer Nebenzeitbewegung erzielt. Es kann auch eine Minimierung der auftretenden Verlustleistung eine Minimierung der eintretenden thermischen Belastung des Werkzeugs infolge warmlaufender Antriebsmittel erreicht werden. Darüber hinaus kann auch bei Berücksichtigung einer Kombination von stehenden Zielen erreicht werden, beispielsweise Zeitersparnis und Energieersparnis. Der Wegfindungsalgorithmus erfordert als Eingabe lediglich die ohnehin bekannte Startposition, die angestrebte Endposition und die geometrischen Bedingungen, die den Verfahrbereich abbilden. Hierdurch kann der Wegfindungsalgorithmus selbsttätig ablaufen, so dass Eingriffe durch einen Benutzer reduziert werden können.

In einer bevorzugten Ausführungsform umfasst das Bahnführungsverfahren einen weiteren, anschließenden Verfahrensschritt. Darin wird die erste Trajektorie rechnerisch mit einem Filter beaufschlagt. Der Filter ist ein in der Steuerung der Werkzeugmaschine ein Abbild der dynamischen Eigenschaften der Werkzeugmaschine. Der Filter erkennt Befehle an die Werkzeugmaschine, die dazu geeignet sind, eine nicht bestimmungsgemäße und/oder übermäßig verschleißintensive Bewegung des Werkzeugs hervorzurufen. Derartige Befehle werden vom Filter in der Werkzeugmaschine auf ein tolerierbares Maß reduziert oder komplett unterdrückt. Das Beaufschlagen mit dem Filter erfolgt im erfindungsgemäßen Verfahren in Form einer Simulation der ersten Trajektorie. Die dynamischen Eigenschaften bilden die Spezifikationen des Werkzeugs ab und umfassen maximale Beschleunigungen, maximale Geschwindigkeiten und eine Charakteristik für verschleißintensive Schwingungen. Der Filter spiegelt diese Spezifikationen in Form von dynamischen Eigenschaften insgesamt wider.

Es wird anhand des Filters eine zweite Trajektorie ermittelt, die das Werkzeug abfährt, wenn es einen oder mehrere Befehle erhält, die zu einem Abfahren der ersten Trajektorie bestimmt sind. Dabei umfasst die zweite Trajektorie eine Mehrzahl von Punkten, die die zweite Trajektorie numerisch abbilden.

In einem weiteren Verfahrensschritt werden Punkte der zweiten Trajektorie jeweils einzeln auf die Einhaltung der geometrischen Bedingungen geprüft. Es wird eine verletzte geometrische Bedingung erkannt und identifiziert, wenn mindestens ein Punkt der zweiten Trajektorie eine geometrische Bedingung nicht erfüllt.

In einem weiteren Verfahrensschritt wird auf Basis der erfassten verletzten geometrischen Bedingung eine Korrektur-Bedingung erkannt. Die Korrektur-Bedingung ist eine der geometrischen Bedingungen, die zur Eingabe des Wegfindungsalgorithmus gehört, und durch deren Modifikation eine kollisionsfreie Nebenzeitbewegung zu erzielen ist. Die Korrektur-Bedingung stellt eine Stellgröße für den Wegfindungsalgorithmus dar. Die derart veränderten geometrischen Bedingungen stellen dem Wegfindungsalgorithmus für einen erneuten Durchlauf eine modifizierte Aufgabenstellung zur Verfügung, die zu einer ersten und zweiten Trajektorie führt, die jeweils von der ersten und zweiten Trajektorie des ersten Durchlaufs abweichen. Das Bereitstellen einer derart modifizierten Eingabe für den Wegfindungsalgorithmus stellt einen Korrekturschritt dar.

Das beanspruchte Verfahren ist damit dazu geeignet, von einem Filter hervorgerufene Abweichungen von der ersten Trajektorie zu antizipieren und eine Kollision zu vermeiden. Hierbei wird mit dem Erkennen der Korrektur-Bedingung einer antizipierten Kollisionsgefahr entgegengewirkt. Das erfindungsgemäße Verfahren verhindert damit Beschädigungen an der Werkzeugmaschine und stellt gleichzeitig eine zeitsparende, energiesparende und/oder wärmevermeidende optimierte Trajektorie für eine Nebenzeitbewegung zur Verfügung.

In einer besonders bevorzugten Ausführungsform des Bahnführungsverfahrens werden bei einem ersten Durchlauf der beschriebenen Verfahrensschritte mit den geometrischen Bedingungen, die als Eingabe des Wegfindungsalgorithmus dienen, die realen Abmessungen des Verfahrbereichs abgebildet. Hierbei werden auch die Sicherheitsabstände des Werkzeugs von Oberflächen von Komponenten der Werkzeugmaschine berücksichtigt. Bei einem erneuten Durchlauf der beschriebenen Verfahrensschritte weichen die geometrischen Bedingungen, die als Eingabe des Wegfindungsalgorithmus dienen, infolge der Modifikation der Korrektur-Bedingung unter Berücksichtigung der Sicherheitsabstände von den realen Abmessungen des Verfahrbereichs ab. Die beschriebenen Verfahrensschritte werden solange wiederholt, bis alle Pfadpunkte der zweiten Trajektorie sämtliche geometrische Bedingungen erfüllen, so dass keine Kollision des Werkzeugs vorliegt.

Insgesamt erkennt das erfindungsgemäße Verfahren, wie eine rechnerisch ermittelte erste Trajektorie real von einem Werkzeug unter Einwirkung des Filters in Form einer zweiten Trajektorie umgesetzt wird. Es wird geprüft, ob die real umsetzbare zweite Trajektorie weiterhin die unerlässlichen geometrischen Bedingungen für eine Kollisionsvermeidung erfüllt. Wenn eine geometrische Bedingung verletzt wird, wird durch Modifikation der Eingabe des Wegfindungsalgorithmus dem Wegfindungsalgorithmus solange eine modifizierte Aufgabe bereitgestellt, bis nach Berücksichtigung des Filters mindestens eine optimierte Trajektorie vorliegt, deren Umsetzung auf der Werkzeugmaschine eine Nebenzeitbewegung hervorruft, die kollisionsfrei und gleichzeitig auf mindestens einen Zielparameter optimiert ist.

Das erfindungsgemäße Verfahren erlaubt es, in einfacher Weise und mit wenigen Durchläufen zu einer optimierten Trajektorie zu gelangen, die im Hinblick auf eine beliebige Zusammenstellung von Zielparametern eine optimierte Nebenzeitbewegung erzeugt. Dabei wird mindestens ein Befehl für eine zuverlässig kollisionsfreie Nebenzeitbewegung ermittelt. Zu diesem Zweck kann ein einfacher Wegfindungsalgorithmus eingesetzt werden, der konstruktive Gegebenheiten der Werkzeugmaschine, beispielsweise deren Schwingungsverhalten, nicht berücksichtigt. Hierdurch wird die Komplexität des erfindungsgemäßen Verfahrens begrenzt, so dass dieses niedrige Anforderungen an die eingesetzte Rechenleistung stellt. Dies erlaubt auch eine kosteneffiziente Implementierung des erfindungsgemäßen Verfahrens in Werkzeugmaschinen mit einfacher Steuerungshardware. Hierdurch können vorhandene Werkzeugmaschinen in einfacher Weise mit dem erfindungsgemäßen Verfahren nachgerüstet werden. Ferner wird durch die Auswahl der Korrektur-Bedingung eine komplexe ebene oder räumliche Aufgabenstellung in überraschend einfacher Form gelöst.

Vorzugsweise wird im erfindungsgemäßen Verfahren bei einem zweiten Durchlauf der oben beschriebenen Verfahrensschritte wiederum eine zugehörige erste Trajektorie durch den Wegfindungsalgorithmus ermittelt. Ebenso wird vom Wegfindungsalgorithmus wiederum mindestens ein korrespondierender Befehl für die Bewegung des Werkzeugs ermittelt. Durch Beaufschlagen der ersten Trajektorie mit dem Filter wird eine zweite Trajektorie ermittelt. Die zweite Trajektorie ist dabei der real vom Werkzeug abgefahrene Weg, wenn es mit mindestens einem Befehl, der mit der ersten Trajektorie aus dem zweiten Durchlauf angesteuert wird. Dabei liegt die zweite Trajektorie des zweiten Durchgangs zwischen der ersten Trajektorie des zweiten Durchgangs und der zweiten Trajektorie des ersten Durchgangs. Dadurch wird in einem nachfolgenden Durchlauf der oben beschriebenen Verfahrensschritte stets eine neue zweite Trajektorie ermittelt, die der ersten Trajektorie aus dem vorangegangenen Durchlauf angenähert ist. Hierdurch wird in einfacher Weise mit der ersten Trajektorie aus dem vorangegangenen Durchlauf ein Approximationsziel für den nachfolgenden Durchlauf definiert. Folglich ist das erfindungsgemäße Verfahren dazu geeignet, durch geringfügige Variation eines Parameters oder einer geometrischen Bedingung eine komplexe ebene oder räumliche Optimierungsaufgabe zu lösen. Dadurch wird die Umsetzbarkeit auf Werkzeugmaschinen mit einfacher Hardware weiter verbessert.

In einer bevorzugten Ausführungsform der Erfindung wird beim Erkennen der verletzten geometrischen Bedingung der Weg von der Startposition zur Zielposition in Abschnitte entlang einer Gesamtbewegungsrichtung eingeteilt. Eine Begrenzung eines Abschnitts kann hierbei durch eine Kante einer Störkontur, beispielsweise einer Kante des Werkstücks, definiert sein. Durch mindestens zwei Punkte im Bereich der Begrenzung jeweils eines Abschnitts wird ein angestrebter Zielkorridor für die Nebenzeitbewegung des Werkzeugs definiert. Eine Kollision wird erkannt, wenn erkannt wird, dass ein Punkt der zweiten Trajektorie im Bereich der Begrenzung des Abschnitts außerhalb des Zielkorridors liegt. In einer besonders bevorzugten Ausführungsform der Erfindung erfolgt ein derartiges Erkennen einer Kollision separat für jeden Abschnitt entlang der Gesamtbewegungsrichtung.

Alternativ kann die Kollision erkannt werden, wenn mindestens ein Punkt der zweiten Trajektorie einen räumlichen Bereich einer der abbildenden geometrischen Bedingungen überlagert.

In einer bevorzugten Ausführungsform der Erfindung ist der Filter als Sollwertfilter, insbesondere als Hochpassfilter, als Tiefpassfilter, als Bandpassfilter, als Bandsperrefilter, oder als Multiratenfilter ausgebildet. Das erfindungsgemäße Verfahren kann damit auf Werkzeuge mit jeglicher denkbaren Form von Sollwertfiltern angewandt werden. Das Verfahren ist dazu geeignet, jede denkbare Form an Filtereinwirkungen zu verarbeiten und zu korrigieren, die durch unterschiedliche Typen an Filtern hervorgerufen werden. Das beanspruchte Verfahren passt sich dadurch selbsttätig an die vorliegende Aufgabe zur Findung und Durchführung einer optimierten Trajektorie für eine Nebenzeitbewegung an.

Bevorzugt wird beim erfindungsgemäßen Verfahren für alle Punkte der zweiten Trajektorie eine Verletzung der geometrischen Bedingungen geprüft, so dass auch eine Mehrzahl an verletzten geometrischen Bedingungen feststellbar ist. Ferner können mehrere Punkte der zweiten Trajektorie eine geometrische Randbedingung verletzen, beispielsweise wenn ein Abschnitt der zweiten Trajektorie innerhalb einer Kontur eines Hindernisses liegt. Vorzugsweise wird jeder verletzen geometrischen Bedingung mindestens eine Korrektur-Randbedingung zugeordnet. Hierdurch kann in einem einzigen Korrekturschritt eine Vielzahl an Verletzungen von geometrischen Bedingungen behoben werden. Dies erlaubt eine weitere Reduktion der erforderlichen Durchläufe des beanspruchten Trajektorienbestimmungsverfahrens. In einer besonders bevorzugten Ausführungsform der Erfindung wird jeder verletzten geometrischen Bedingung eine Korrektur-Maßnahme zugeordnet.

In einer weiteren bevorzugten Ausführungsform der Erfindung wird beim Korrekturschritt der Ausschnitt des Verfahrbereichs verkleinert, der sich aus den modifizierten geometrischen Bedingungen ergibt, die als Eingabe für den Wegfindungsalgorithmus dienen. Bei der Ermittlung der ersten Trajektorie ist für den Wegfindungsalgorithmus nur der Ausschnitt des Verfahrbereichs erreichbar, der nicht gegen die modifizierten geometrischen Bedingungen verstößt. Damit steht dem Wegfindungsalgorithmus bei einem erneuten Durchlauf lediglich ein reduzierter Spielraum zur Verfügung. Überraschenderweise führt im erfindungsgemäßen Verfahren eine Verkleinerung des Bereichs, in dem nach einer Lösung für eine ebene oder räumliche Aufgabe gesucht wird, zu einem beschleunigten Ermitteln der angestrebten Lösung, nämlich der angestrebten optimierten Trajektorie für die Nebenzeitbewegung. Dadurch wird die Komplexität des erfindungsgemäßen Verfahrens weiter reduziert und die Umsetzbarkeit auf einfacher Hardware weiter verbessert.

Insbesondere kann beim erfindungsgemäßen Verfahren zur Verkleinerung des für den Wegfindungsalgorithmus erreichbaren Ausschnitts des Verfahrbereichs eine Vergrößerung einer Störkontur, eine Erhöhung einer Bohrloch-Austrittshöhe, eine Verkleinerung eines Näherungskanals, und/oder eine ein Vergrößern einer Eigenkontur des Werkzeugs erfolgen. Derartige Größen stellen geometrische Bedingungen dar, die bei der Planung des Einsatzes eines Werkzeugs unerlässlich sind und ohnehin vorliegen. Das erfindungsgemäße Verfahren ist folglich dazu ausgebildet, ohne zusätzliche Eingaben durch einen Benutzer, die optimierte Trajektorie und mindestens einen korrespondierenden Befehl für eine optimierte Nebenzeitbewegung zu ermitteln. Das erfindungsgemäße Verfahren ist damit automatisierbar, so dass der Bedienkomfort gesteigert wird.

In einer weiteren bevorzugten Ausführungsform der Erfindung ist der mindestens eine Zielparameter ein Zeitbedarf, ein Energiebedarf für die Nebenzeitbewegung, oder die Verlustleistung der Nebenzeitbewegung, und damit die Wärmeentwicklung bei der Nebenzeitbewegung. In einer weiteren Ausführungsform der Erfindung ist der Wegfindungsalgorithmus dazu ausgebildet, auf Basis einer Mehrzahl an Zielparametern optimiert die erste Trajektorie zu ermitteln. Dabei können die einzelnen Zielparameter zueinander gewichtet sein.

Vorzugsweise kann der Filter im erfindungsgemäßen Verfahren dynamischen Grenzen und/oder einer bestimmungsgemäßen Schwingungscharakteristik des Werkzeugs entsprechen. Dadurch wird ein Befehl an die Werkzeugmaschine, beispielsweise ein Befehl zur Beschleunigung des Werkzeugs um einen bestimmten Betrag, nicht ausgeführt oder in modifizierter Form an ein Antriebsmittel der Werkzeugmaschine weitergegeben, wenn der Befehl selbst eine dynamische Grenze verletzt. Dadurch wird eine übermäßige Beanspruchung des Werkzeugs vermieden. Gleichermaßen wird eine Befehl vom Filter modifiziert oder unterdrückt, der dazu geeignet ist, eine unzulässige Schwingung des Werkzeugs hervorzurufen. Dadurch wird eine nicht bestimmungsgemäße Beanspruchung des Werkzeugs vermieden und die Lebensdauer des Werkzeugs gesteigert.

In einer weiteren Ausführungsform des erfindungsgemäßen Bahnführungsverfahrens weist mindestens eine geometrische Bedingung eine zeitliche Varianz auf. Dabei wird die Erkennung einer verletzten geometrischen Bedingung auch auf Basis der zeitlichen Varianz durchgeführt, so dass eine verletzte geometrische Bedingung eine Überlappung von räumlichen Koordinaten des Werkzeugs mit einer Begrenzung des Verfahrbereichs und eine zugehörige zeitliche Überlappung, also eine Gleichzeitigkeit, erfordert. Dadurch kann eine zeitliche Veränderung des Verfahrbereichs während der Nebenzeitbewegung berücksichtigt werden, beispielsweise wenn ein Werkstück beim Fertigungsverfahren weiterbewegt wird. Dies erlaubt eine bessere Ausnutzung des vorhandenen Verfahrbereichs während eines Fertigungsvorgangs, so dass die erzielbare Zeitersparnis bei der Nebenzeitbewegung weiter gesteigert wird.

Ferner kann der Befehl beim erfindungsgemäßen Verfahren ein Hervorrufen einer translatorischen und/oder rotatorischen Geschwindigkeit, einer translatorischen und/oder rotatorischen Beschleunigung, und/oder eines translatorischen und/oder rotatorischen Rucks entlang einer Achse des Werkzeugs sein. Das erfindungsgemäße Verfahren ist dazu ausgebildet, jeglichen denkbaren Befehl zur Bewegung eines Werkzeugs zu ermitteln, der von Antriebsmitteln des Werkzeugs umsetzbar ist. Das erfindungsgemäße Verfahren ist damit im Wesentlichen universell für jeglichen Typ von Ansteuerung eines Werkzeugs geeignet. Dadurch wird das denkbare Einsatzspektrum vergrößert.

In einer besonders bevorzugten Ausführungsform des erfindungsgemäßen Verfahrens wird bei der Erfassung einer verletzten geometrischen Bedingung auch eine Überschreitungsweite erfasst. Die Überschreitungsweite kann beispielsweise die Anzahl von benachbarten Punkten der zweiten Trajektorie sein, die die gleiche geometrische Bedingung verletzen. Die Überschreitungsweite ist dabei ein Maß, wie stark eine geometrische Bedingung verletzt wird. Wenn bei der zweiten Trajektorie festgestellt wird, dass das Werkzeug beispielsweise mit der Wandung der Werkzeugmaschine kollidieren würde, dann entspricht die Überschreitungsweite der maximalen Eindringtiefe der zweiten Trajektorie in die Wandung. Bei einer erhöhten maximalen Eindringtiefe liegt beispielsweise für eine entsprechend erhöhte Anzahl an Punkten der zweiten Trajektorie eine verletzte geometrische Bedingung vor. Die Überschreitungsweite kann auch für jegliche weitere geometrische Bedingung erfasst werden, beispielsweise als Abweichung von einem angestrebten Bahnwinkel.

In einer alternativen Ausführungsform der Erfindung wird bei jedem Abschnitt entlang der Gesamtbewegungsrichtung geprüft, ob der Punkt der zweiten Trajektorie im Bereich der Begrenzung des jeweiligen Abschnitts im von mindestens zwei Punkten definierten Zielkorridor liegt. Wenn der Punkt der zweiten Trajektorie außerhalb des Zielkorridors liegt, wird die Distanz des Punktes der zweiten Trajektorie zum nächstgelegenen Punkt des Zielkorridors berechnet. Die Höhe der Distanz ist dabei die zu ermittelnde Überschreitungsweite und dient als Maß für den Umfang einer einzuleitenden Modifikation der zugehörigen Korrektur-Bedingung.

Anhand der Überschreitungsweite wird vorzugsweise eine Schrittweite für das Modifizieren der Korrektur-Bedingung erfasst. Dabei ist die Schrittweite bei der Modifikation der Korrektur-Bedingung umso größer, je größer die Überschreitungsweite ist. Hierdurch wird in Abhängigkeit vom Umfang des Korrekturbedarfs einer bisher errechneten ersten und zweiten Trajektorie eine korrespondierend umfangreiche Korrekturmaßnahme bzw. Modifikation eingeleitet. Das erfindungsgemäße Verfahren ist dadurch dynamisch anpassbar. Folglich kann auch bei starken Einwirkungen des Filters bei einer reduzierten Zahl an Durchläufen des Verfahrens die mindestens eine optimierte Trajektorie ermittelt werden, die für eine optimierte Nebenzeitbewegung erforderlich ist. Damit werden der notwendige Rechenaufwand und die Anforderungen an die eingesetzte Hardware verringert.

Die der Erfindung zugrundeliegende Aufgabe wird ferner durch ein Programm gelöst, das zur Steuerung eines Werkzeugs in einer Werkzeugmaschine dient. Die Werkzeugmaschine weist mindestens ein Antriebsmittel auf, durch das eine Bewegung des Werkzeugs hervorgerufen wird. Dies ist vorzugsweise ein Elektromotor zur Erzeugung einer Translationsbewegung oder einer Rotationsbewegung des Werkzeugs. Das erfindungsgemäße Programm ist dazu ausgebildet, mindestens eine Ausführungsform des beanspruchten Trajektorienbestimmungsverfahrens auszuführen. Ferner wird durch das Programm die ermittelte mindestens eine Führungsgröße an das Antriebsmittel ausgegeben, so die optimierte Nebenzeitbewegung durchgeführt wird. Das erfindungsgemäße Programm kann als Update eine vorhandene Steuersoftware eines Werkzeugs ersetzen oder ergänzen. Dadurch kann das beanspruchte Bahnführungsverfahren in einfacher Form mit einem bestehenden Werkzeug durchgeführt werden.

Gleichermaßen wird die vorliegende Aufgabenstellung durch eine Steuereinheit für eine Werkzeugmaschine gelöst, die einen Speicher und eine Recheneinheit umfasst, die dazu ausgebildet ist, das erfindungsgemäße Programm auszuführen. Auf der erfindungsgemäßen Steuereinheit kann auch weitere Software gespeichert sein, die der Bedienung der Werkzeugmaschine dient. Die erfindungsgemäße Steuereinheit kann in einfacher Weise als Nachrüst-Modul einer vorhandenen Werkzeugmaschine hinzugefügt werden oder eine vorhandene Steuereinheit ersetzen.

Die zugrundeliegende Aufgabe wird des Weiteren durch die erfindungsgemäße Werkzeugmaschine gelöst. Die Werkzeugmaschine umfasst mindestens ein Werkzeug und eine erfindungsgemäße Steuereinheit. Die Steuereinheit kann als Mikrocontroller oder als Computer ausgebildet sein. Die beanspruchte Werkzeugmaschine setzt das erfindungsgemäße Verfahren anhand des beanspruchten Programms und der beanspruchten Steuereinheit in die Praxis um.

Die Erfindung wird im Folgenden anhand der in den Figuren abgebildeten Ausführungsformen näher erläutert. Es zeigt:
- FIG 1: eine schematische Seitenansicht einer ersten Ausführungsform des erfindungsgemäßen Bahnführungsverfahrens;
- FIG 2: eine schematische Detailansicht der ersten Ausführungsform des erfindungsgemäßen Bahnführungsverfahrens;
- FIG 3: eine schematische Detailansicht der zweiten Ausführungsform des erfindungsgemäßen Bahnführungsverfahrens.

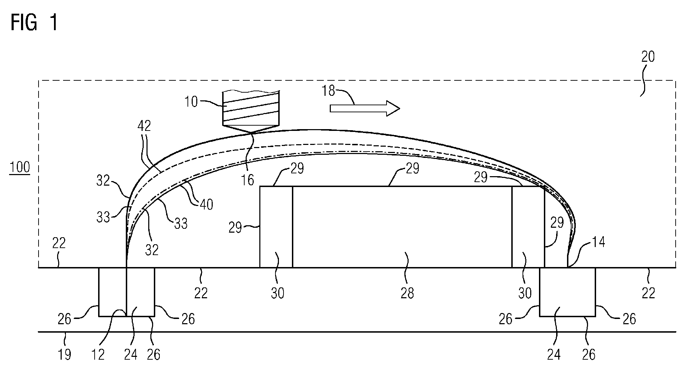

In FIG 1 ist eine erste Ausführungsform des erfindungsgemäßen Verfahrens 100 in einer Seitenansicht dargestellt. Die hierbei dem Verfahren 100 zugrundeliegende Aufgabenstellung ist in FIG 1 als ebene Projektion einer räumlichen Aufgabenstellung abgebildet. Ein Werkzeug 10 bewegt sich dabei in einem Verfahrbereich 20, der dem gesamten Raum entspricht, der für das Werkzeug 10 kollisionsfrei erreichbar ist. Das Werkzeug 10 führt in FIG 1 eine Nebenzeitbewegung durch, die im Wesentlichen in einer Gesamtbewegungsrichtung 18 erfolgt. Das Werkzeug 10 wird aus dem Bereich einer Ausnehmung 24 an einer Startposition 12 zum Bereich einer Ausnehmung 24 an einer Zielposition 14 geführt. Die Ausnehmungen 24 sind in einer Werkstückkontur 22 ausgebildet, die sich im Wesentlichen horizontal erstreckt. Ferner sind die Ausnehmungen 24 von Wandungen 26 begrenzt, die aneinander angrenzen.

Die Koordinaten senkrecht zur skizzierten Gesamtbewegungsrichtung 18 sind bei der Nebenzeitbewegung nach FIG 1 relativ zu einer Bezugsebene 19 definiert. Als Referenzpunkt für die Nebenzeitbewegung des Werkzeugs 10 dient der Werkzeugbezugspunkt 16, der sich im Wesentlichen an der Spitze des Werkzeugs 10 befindet. Bei der Bewegung von der Startposition 12 zur Zielposition 14 umfährt das Werkzeug 10 ein Hindernis 28. Das Hindernis 28 verkleinert mit seiner Hinderniskontur 29 den kollisionsfrei erreichbaren räumlich begrenzten Verfahrbereich 20. Die Hinderniskontur 29 ist zusätzlich mit einem Sicherheitsabstand 30 beaufschlagt, den das Werkzeug 10 nicht unterschreiten darf. Damit ist ein Eindringen des Werkzeugs 10 in den Bereich, der von den Hinderniskonturen 29 des Hindernisses 28 selbst und den Sicherheitsabständen 30 definiert ist, nicht zulässig.

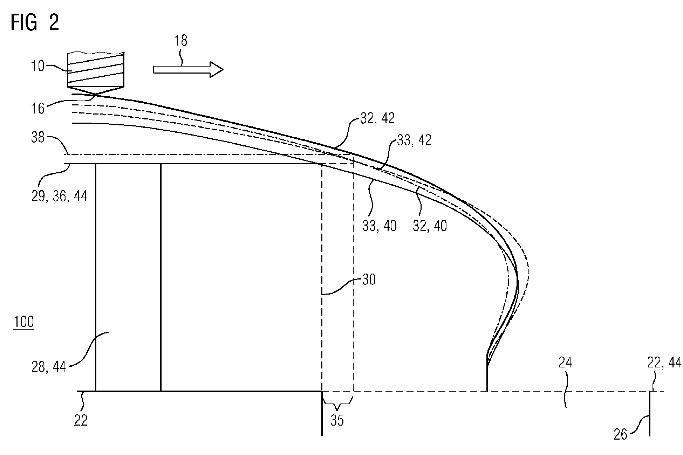

FIG 1 zeigt auch eine erste Trajektorie 32, die bei einem ersten Durchlauf 40 des beanspruchten Verfahrens 100 von einem Wegfindungsalgorithmus ermittelt wird. Ebenso zeigt FIG 1 die zweite Trajektorie 33, die nach dem Beaufschlagen der ersten Trajektorie 32 des ersten Durchlaufs 40 mit dem Filter errechnet wird. Aus FIG 1 geht ebenfalls die erste Trajektorie 32 hervor, der bei einem zweiten Durchlauf 42 des erfindungsgemäßen Verfahrens 100 vom Wegfindungsalgorithmus ermittelt wird. Mit unterbrochener Linie ist ferner die zweite Trajektorie 33 des zweiten Durchlaufs 42 des erfindungsgemäßen Verfahrens 100 abgebildet. Der Ablauf des erfindungsgemäßen Verfahrens 100 wird genauer im Zusammenhang mit der folgenden FIG 2 erläutert.

In FIG 2 ist in einer Detailansicht der Ablauf der ersten Ausführungsform des erfindungsgemäßen Verfahrens 100 dargestellt. Dabei bewegt sich das Werkzeug 10 weiterhin entlang der Gesamtbewegungsrichtung 18. Die Betrachtung der vom Werkzeug 10 zurückgelegten Trajektorie erfolgt auf Basis des Werkzeugbezugspunkts 16. Auf der Werkstück-Kontur 22 ist das Hindernis 28 angeordnet, das von seiner Hindernis-Kontur 29 definiert ist und im Bereich der Ausnehmung 24 an der Zielposition 14 angeordnet ist. Am Hindernis 28 ist ferner ein Sicherheitsabstand 30 definiert, der das Hindernis 28 an einer Seitenfläche einhüllt. Ein Eindringen des Werkzeugs 10 in den über den Sicherheitsabstand 30 definierten Bereich ist nicht zulässig.

Beim ersten Durchlauf 40 des erfindungsgemäßen Verfahrens 100 wird die zugehörige erste Trajektorie 32 ermittelt, die den von der Hinderniskontur 29 und dem Sicherheitsabstand 30 definierten Bereich umfährt. Mit der ersten Trajektorie 32 des ersten Durchlaufs 40 korrespondiert eine Mehrzahl an Befehlen zur Bewegung des Werkzeugs 10. Im erfindungsgemäßen Verfahren 100 wird die erste Trajektorie 32 der korrespondierenden Befehle rechnerisch mit dem Filter beaufschlagt. Die Beaufschlagung mit dem Filter entspricht im Wesentlichen einer Simulation einer Ausführung der mit der ersten Trajektorie 32 korrespondierenden Befehle auf dem Werkzeug 10 und der daraus resultierenden zweiten Trajektorie 33 des ersten Durchlaufs 40. Die zweite Trajektorie 33 des ersten Durchlaufs 40 durchschneidet den Bereich, der durch den Sicherheitsabstand 30 definiert wird. Das Durchschneiden des Bereichs des Sicherheitsabstands 30 um eine Überschreitungsweite 35 wird als eine verletzte geometrische Bedingung vom beanspruchten Verfahren erfasst. Dabei ist die Überschreitungsweite 35 ein Maß, das den Umfang eines folgenden Korrektur-Schrittes definiert.

Im Folgenden wird im erfindungsgemäßen Verfahren über einen nicht näher dargestellten Korrektur-Schritt eine Korrektur-Randbedingung 36 erfasst und die entsprechende Randbedingung modifiziert. Die Höhe des Hindernisses 28 wird als Korrektur-Bedingung identifiziert und eine geänderte Kontur 38 als modifizierte geometrische Bedingung an den Wegfindungsalgorithmus für einen zweiten Durchlauf übergeben. Die Modifikation besteht darin, dass beim zweiten Durchlauf 42 des Wegfindungsalgorithmus nunmehr die geänderte Höhe einer Oberseite des Hindernisses 28 und des korrespondierenden Bereichs des Sicherheitsabstands 30 zugrunde gelegt wird. Die Hindernis-Kontur 29 selbst ist eine starre geometrische Bedingung 44, so dass die Hindernis-Kontur 29 nicht derart geändert werden kann, dass die modifizierte geometrische Bedingung 28 räumlich nur außerhalb der Hindernis-Kontur 29 liegen kann.

Beim zweiten Durchlauf 42 des Wegfindungsalgorithmus wird eine zugehörige erste Trajektorie 32 ermittelt, der den Bereich, der durch die modifizierte geometrische Bedingung 38 definiert ist, umfahren wird. Durch ein Beaufschlagen der ersten Trajektorie 32 des zweiten Durchgangs 42 wird die zweite Trajektorie 33 des zweiten Durchgangs 42 ermittelt. Die zweite Trajektorie 33 des zweiten Durchgangs 42 liegt innerhalb des Bereichs, der mittels der modifizierten geometrischen Bedingung 39 definiert wird. Ferner umfährt die zweite Trajektorie 33 des zweiten Durchgangs 42 das Hindernis 28 und den Bereich des Sicherheitsabstands 30. Die zweite Trajektorie 33 des zweiten Durchgangs 42 entspricht in der Nähe des Bereichs des Sicherheitsabstands 30 im Wesentlichen der ersten Trajektorie des ersten Durchgangs 40.

Beim zweiten Durchlauf 42 des Wegfindungsalgorithmus wird damit im Wesentlichen eine um die Effekte des Filters bereinigte zweite Trajektorie 33 ermittelt, die mit einer errechneten und angestrebten ersten Trajektorie 32 im ersten Durchlauf 40 korrespondiert. Insgesamt liegt die zweite Trajektorie 33 des zweiten Durchgangs 42 zwischen der ersten Trajektorie 32 des ersten Durchgangs 40 und der ersten Trajektorie 32 des zweiten Durchgangs 42.

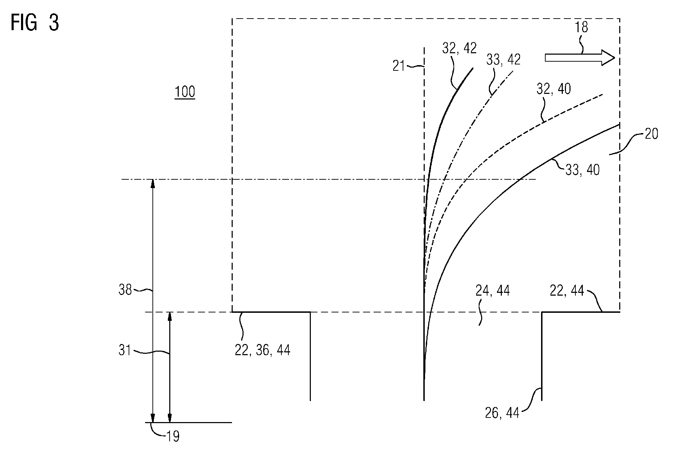

In FIG 3 ist in einer Detailansicht eine zweite Ausführungsform des erfindungsgemäßen Verfahrens 100 abgebildet. Dabei wird das nicht näher dargestellte Werkzeug 10 aus einer Startposition 12 im Bereich einer Ausnehmung 24 in der Werkstück-Kontur 22 entfernt. Die Bewegung des Werkzeugs 10 erfolgt dabei im Verfahrbereich 20, der im Wesentlichen dem lichten Raum entspricht, der kollisionsfrei erreichbar ist. Die Bewegung zu einer nicht näher dargestellten Zielposition 14 erfolgt im Wesentlichen entlang einer Gesamtbewegungsrichtung 18. Die von Wandungen 26 begrenzte Ausnehmung 24 entspricht einer Bohrung, die im Werkstück ausgebildet ist. Dabei stellen die Werkstück-Kontur 22 und die Wandungen 26 starre Randbedingungen 44 dar, die jeweils Kollisionsbedingungen definieren. Beim ersten Durchlauf 40 des Wegfindungsalgorithmus wird eine erste Trajektorie 32 ermittelt, bei dem ausgehend von der Startposition 12 zunächst lediglich eine Bewegung entlang einer Bezugsachse 21 erfolgt. Die erste Trajektorie 32 liegt im Bereich der Ausnehmung 24 auf der Bezugsachse 21. Eine derartige Bewegung ohne Queranteil zur Bezugsachse 21 gewährleistet, dass das Werkzeug 10 nicht mit der Wandung 26 kollidiert.

Ferner wird im erfindungsgemäßen Verfahren 100 der für die erste Trajektorie 32 erforderliche mindestens eine Befehl an die Werkzeugmaschine aus dem ersten Durchgang 40 mit dem Filter beaufschlagt und die zugehörige zweite Trajektorie 33 ermittelt. Die zweite Trajektorie 33 des ersten Durchgangs 40 ist der Weg, den das Werkzeug 10 zurücklegt, wenn der dem ersten Durchgang 40 zugehörige mindestens eine Befehl für die Werkzeugmaschine eingesetzt wird. Die zweite Trajektorie 33 des ersten Durchgangs 40 weist im Bereich im Bereich der Ausnehmung 24 eine Abweichung von der Bezugsachse 21 auf. Die Abweichung weist dabei eine Überschreitungsweite 35, die ein Maß dafür ist, in welchem Umfang die Korrektur-Randbedingung 36 im zweiten Durchlauf 42 zu modifizieren ist. Durch die Abweichung um die Überschreitungsweite 35 droht eine Kollision mit der Wandung 26 der Ausnehmung 24.

Das erfindungsgemäße Verfahren 100 identifiziert die Austrittshöhe 31 aus der Ausnehmung 24 als die Korrektur-Bedingung 36. Dabei ist die Austrittshöhe 31 relativ zur Bezugsebene 19 definiert. Im Korrektur-Schritt des erfindungsgemäßen Verfahrens 100 wird die Austrittshöhe 31 für den zweiten Durchlauf 42 eine relativ zur Bezugsebene 19 erhöhte Austrittshöhe 38 als modifizierte geometrische Bedingung eingesetzt. Im zweiten Durchlauf 42 wird eine erste Trajektorie 32 vom Wegfindungsalgorithmus ermittelt, die bis zum Erreichen der modifizierten Austrittshöhe 38 im Wesentlichen auf der Bezugsachse 21 liegt. Ferner wird mindestens ein zugehöriger Befehl ermittelt, der mit der ersten Trajektorie 32 im zweiten Durchlauf 42 korrespondiert. Der mindestens eine Befehl an das Werkzeugs 10 wird rechnerisch mit dem Filter beaufschlagt, so dass die zweite Trajektorie 33 des zweiten Durchlaufs 42 ermittelt wird. Die zweite Trajektorie 33 des zweiten Durchlaufs 42 entspricht dabei dem real abgefahrenen Weg des Werkzeugs 10, wenn es mit dem mindestens einen Befehl angesteuert wird, die mit der ersten Trajektorie 32 im ersten Durchlauf 40 korrespondiert. In einem weiteren Schritt des erfindungsgemäßen Verfahrens 100 wird geprüft, ob für sämtliche Punkte der zweiten Trajektorie 33 aus dem zweiten Durchgang 42 die geometrischen Bedingungen erfüllen, so dass Kollisionen des Werkzeugs 10 vermieden werden. FIG 3 zeigt insgesamt eine ebene Projektion einer räumlichen Aufgabenstellung.

## Patentansprüche

1. Verfahren (100) zur Bestimmung einer optimierten Trajektorie für eine Nebenzeitbewegung eines Werkzeugs (10) einer Werkzeugmaschine von einer Startposition (12) zu einer Zielposition (14) in einem räumlich begrenzten Verfahrbereich (20), der durch geometrische Bedingungen abgebildet ist, unter Vermeidung von Kollisionen, umfassend den Schritt:
a) Ermitteln einer ersten Trajektorie (32) des Werkzeugs(10) mittels eines Wegfindungsalgorithmus, wobei die erste Trajektorie (32) auf mindestens einen wählbaren Zielparameter bei der Nebenzeitbewegung optimiert ist.

2. Verfahren (100) nach Anspruch 1, umfassend ferner die Schritte:
a) Ermitteln einer zweiten Trajektorie (33) durch Simulieren der ersten Trajektorie (32) unter Berücksichtigung eines Filters zur Berücksichtigung dynamischer Eigenschaften der Werkzeugmaschine;
b) Erkennen einer Kollision, wenn an einem Punkt der zweiten Trajektorie (33) eine den Verfahrbereich (20) abbildende geometrische Bedingung verletzt wird;
c) Bestimmen einer Korrektur-Bedingung (36) unter den geometrischen Bedingungen und Modifizieren (38) der Korrektur-Bedingung (36).

3. Verfahren (100) nach Anspruch 2, **dadurch gekennzeichnet, dass** die geometrischen Bedingungen im Schritt a) bei einem ersten Durchlauf (40) des Verfahrens (100) unter Berücksichtigung von Sicherheitsabständen den Oberflächen von mindestens einem Hindernis (28) entsprechen, die den Verfahrbereich (20) begrenzen, und die Schritte a) bis d) wiederholt werden, bis die geometrischen Bedingungen im Schritt c) für alle Punkte der zweiten Trajektorie (33) erfüllt sind.

4. Verfahren (100) nach Anspruch 3, **dadurch gekennzeichnet, dass** eine zweite Trajektorie (33) eines zweiten Durchgangs (42) der Schritte a) bis d) zwischen der ersten Trajektorie (32) des ersten Durchlaufs (40) und der ersten Trajektorie (32) des zweiten Durchlaufs (42) liegt.

5. Verfahren (100) nach einem der Ansprüche 2 bis 4, **dadurch gekennzeichnet, dass** der Filter als Sollwertfilter, insbesondere als Hochpassfilter, als Tiefpassfilter, als Bandpassfilter, als Bandsperrefilter oder als Multiratenfilter ausgebildet ist.

6. Verfahren (100) nach einem der Ansprüche 2 bis 5, **dadurch gekennzeichnet, dass** jeder verletzten geometrischen Bedingung mindestens eine Korrektur-Bedingung zugeordnet ist.

7. Verfahren (100) nach einem der Ansprüche 2 bis 6, **dadurch gekennzeichnet, dass** im Schritt d) der für den Wegfindungsalgorithmus erreichbare Ausschnitt des Verfahrbereichs verkleinert wird.

8. Verfahren (100) nach einem der Ansprüche 2 bis 7, **dadurch gekennzeichnet, dass** das Modifizieren der Korrektur-Bedingung als ein Vergrößern einer Störkontur, ein Verändern einer Bohrloch-Austrittshöhe, ein Verkleinern eines Näherungskanals und/oder als Vergrößern einer Eigenkontur des Werkzeugs (10) ausgebildet ist.

9. Verfahren (100) nach einem der Ansprüche 1 bis 8, **dadurch gekennzeichnet, dass** der mindestens eine wählbare Zielparameter die Wegstrecke der Nebenzeitbewegung, der Zeitbedarf, der Energieverbrauch, oder die Verlustleistung der Werkzeugmaschine bei der Nebenzeitbewegung ist.

10. Verfahren (100) nach einem der Ansprüche 2 bis 9, **dadurch gekennzeichnet, dass** der Filter einen Dynamikgrenzwert der Werkzeugmaschine und/oder einer Schwingungscharakteristik der Werkzeugmaschine (10) umfasst.

11. Verfahren (100) nach Anspruch 10, **dadurch gekennzeichnet, dass** mindestens eine geometrische Bedingung eine zeitliche Varianz aufweist und der Schritt c) auch basierend auf der zeitlichen Varianz erfolgt.

12. Verfahren (100) nach einem der Ansprüche 1 bis 11, **dadurch gekennzeichnet, dass** mindestens ein Befehl an ein Antriebsmittel des Werkzeugs zu einem Hervorrufen einer translatorischen und/oder rotatorischen Geschwindigkeit, Beschleunigung oder eines translatorischen oder rotatorischen Rucks des Werkzeugs (10) ausgebildet ist.

13. Verfahren (100) nach einem der Ansprüche 2 bis 12, **dadurch gekennzeichnet, dass** im Schritt c) eine Überschreitungsweite der verletzten geometrischen Bedingung erfasst wird und im Schritt d) anhand der Überschreitungsweite eine Schrittweite für das Modifizieren bestimmt wird.

14. Programm zur Steuerung mindestens eines Antriebsmittels eines Werkzeugs (10) in einer Werkzeugmaschine, **dadurch gekennzeichnet, dass** das Programm zur Durchführung mindestens eines der Verfahren (100) nach den Ansprüchen 1 bis 13 ausgebildet ist.

15. Steuereinheit für eine Werkzeugmaschine, umfassend einen Speicher und eine Recheneinheit zur Ausführung eines Programms nach Anspruch 14.

16. Werkzeugmaschine, umfassend mindestens ein Werkzeug (10) und eine Datenverarbeitungsanlage, **dadurch gekennzeichnet, dass** die Werkzeugmaschine eine Steuereinheit nach Anspruch 15 aufweist.
